# EUROPEAN PATENT APPLICATION

(11) **EP 4 770 220 A1**
(43) Date of publication of application: **01.07.2026**
(21) Application number: 24904247.4
(22) Date of filing: 10.12.2024
(51) Int. Cl.: H04W 56/00, H04W 72/231, H04W 48/10, H04W 76/27, H04W 92/02

(54) **METHOD AND DEVICE FOR PROVIDING SYNCHRONIZATION SERVICE IN WIRELESS COMMUNICATION SYSTEM**

(30) Priority: 12.12.2023 KR 20230180108
(71) Applicant: SAMSUNG ELECTRONICS CO., LTD., Yeongtong-gu Suwon-si, Gyeonggi-do 16677 (KR)
(72) Inventor: MOON, Sangjun, Suwon-si, Gyeonggi-do 16677 (KR)
(74) Representative: HGF
(86) International application number: PCT/KR2024/020188
(87) International publication number: WO 2025/127682

(57) **Abstract**

The present disclosure relates to a 5^{th} generation (5G) or 6^{th} generation (6G) communication system for supporting higher data rates. The present disclosure relates to a method performed by a UE in a wireless communication system. The UE according to an embodiment of the present disclosure may transmit, to a base station, a registration message including UE capability information, receiving, from the base station, a synchronization information block (SIB) including a reference identifier for performing synchronization and a domain identifier for grouping a plurality of UEs, and perform a sync status update based on the reference identifier and the domain identifier.

## Description

### Technical Field

The present disclosure relates to a wireless communication system, and more particularly, to a method of providing time synchronization between wireless terminals in a 3^{rd} generation partnership project (3GPP) 5^{th} generation system (5GS). In particular, the present disclosure relates to a method of providing time synchronization between base station-based wireless terminals to a plurality of groups of terminals.

### Background Art

5^{th} generation (5G) mobile communication technology defines a wide frequency band in order to enable high transmission rates and new services, and may be implemented in a sub-6 gigahertz ('sub 6 GHz') frequency band, such as 3.5 GHz and an ultra-high frequency band ('above 6 GHz') called a millimeter wave (mmWave), such as 28 GHz and 39 GHz. In addition, in the case of 6^{th} generation (6G) mobile communication technology, which is called a beyond 5G system, the implementation in a terahertz (THz) band (e.g., a band of 95 GHz to 3 THz) is under consideration in order to achieve a transmission rate 50 times faster than that of 5G mobile communication technology and an ultra-low latency reduced to one-tenth, compared to that of 5G mobile communication technology.

In the early stages of 5G mobile communication technology, to support services and satisfy performance requirements for enhanced mobile broadband (eMBB), ultra-reliable low-latency communications (URLLC), and massive machine-type communications (mMTC), standardization has been carried out on beamforming and massive multiple-input and multiple-output (MIMO) for alleviating propagation path loss of radio waves and increasing propagation distance of radio waves in an ultra-high frequency band, support for various numerologies (such as operation of multiple subcarrier spacing) and dynamic operation of slot formats for efficient use of ultra-high frequency resources, initial access technology for supporting multi-beam transmission and wideband, definition and operation of band-width part (BWP), new channel coding methods such as low density parity check (LDPC) code for large-capacity data transmission and polar code for reliable transmission of control information, L2 preprocessing, and network slicing to provide dedicated networks specialized for particular services.

Currently, discussions are underway on initial improvements and performance enhancements of 5G mobile communication technology in consideration of services to be supported by 5G mobile communication technology. Physical layer standardization is in progress for technologies such as vehicle-to-everything (V2X) for assisting autonomous vehicles in making driving decisions based on their own location and status information transmitted by the vehicles and enhancing user convenience, new radio unlicensed (NR-U) for ensuring system operations that satisfy various regulatory requirements in unlicensed bands, NR terminal low power consumption technology (user equipment (UE) power saving), non-terrestrial network (NTN), which is direct UE-satellite communication for ensuring coverage in regions where communication with terrestrial networks is impossible, and positioning.

In addition, standardization of radio interface architectures/protocol fields is underway on technologies such as industrial Internet of things (IIoT) that supports new services through integration and convergence with other industries, integrated access and backhaul (IAB) that provides nodes for network service area expansion by integrating wireless backhaul links and access links, mobility enhancement technology including conditional handover and dual active protocol stack handover, and 2-step random access channel (RACH) for NR which simplifies random access procedures. Standardization of radio interface architectures/protocol fields is also underway on 5G baseline architectures (e.g., service-based architecture, service-based interface) for integrating network functions virtualization (NFV) and software-defined networking (SDN) technologies, and mobile edge computing (MEC) that receives services based on the location of the terminal.

When such 5G mobile communication systems are commercialized, a rapidly increasing number of connected devices will be connected to communication networks, and accordingly, enhancement of the functions and performance of 5G mobile communication systems and the integrated operations of connected devices are expected to be required. To this end, new studies are expected to be conducted into extended reality (XR) for efficiently supporting augmented reality (AR), virtual reality (VR), and mixed reality (MR), 5G performance improvement and complexity reduction using artificial intelligence (AI) and machine learning (ML), Al service support, metaverse service support, drone communications, and the like.

Furthermore, the advancement of such 5G mobile communication systems may serve as a basis for the development of various technologies, including new waveforms to ensure coverage in a terahertz band of 6G mobile communication technology, multi-antenna transmission technology such as full dimensional MIMO (FD-MIMO), array antennas, and large-scale antennas, meta material-based lenses and antennas to improve coverage of terahertz band signals, high-dimensional spatial multiplexing technology using orbital angular momentum (OAM), reconfigurable intelligent surface (RIS) technology, full duplex technology to improve spectral efficiency and system network performance of 6G mobile communication technology, Al-based communication technology that leverages satellite and Al from the design stage and integrates end-to-end Al support to achieve system optimization, and next-generation distributed computing technology that realizes services with complexity exceeding the limits of terminal computing capabilities by utilizing ultra-high-performance communication and computing resources.

As a result of the development of wireless communication systems and the aforementioned advancements in technology, various services have become available. Therefore, there is a need for methods of effectively providing these services, and in particular, methods for efficiently transmitting real-time media such as voice and video calls.

### Disclosure of Invention

### Technical Problem

When a 3^{rd} generation partnership project (3GPP) network (5^{th} generation system (5GS)) operates as a synchronization source and provides time synchronization services to terminals, time synchronization between base station-based wireless terminals may be provided to a plurality of groups of terminals. In this case, the 3GPP network may provide a sync status to terminals in order to guarantee an accuracy level of a sync service provided by the base station. A terminal in a connected state may identify a sync status through signaling between an individual terminal and a base station. However, a terminal in an idle state broadcasts a reference identifier (ID) indicating whether there has been a change in the sync status from the base station, compares the reference ID with their own status of individual terminals, and transitions to a connected state when it is determined that an update is required, and identifies a sync status. In the current method, the terminals in the idle state determine whether the sync status has changed and transition to the connected state. Because this is not to determine whether the sync service accuracy for each individual terminal has been achieved, unnecessary connected state transitions may occur. In addition, because idle terminals simultaneously transition to the connected state, congestion may occur at the base station.

### Solution to Problem

According to the present disclosure, a method, performed by a user equipment (UE), of performing communication may include transmitting, to a base station, a registration message including UE capability information. The method may include receiving, from the base station, a synchronization information block (SIB) including a reference identifier for performing synchronization and a domain identifier for grouping a plurality of UEs. The method may include performing a synchronization status update based on the reference identifier and the domain identifier.

According to the present disclosure, a method, performed by a base station, performing communication may include receiving, from a UE, a registration message including UE capability information. The method may include transmitting, to the UE, an SIB including a reference identifier for performing synchronization and a domain identifier for grouping a plurality of UEs. The method may include performing a sync status update of the UE based on the reference identifier and the domain identifier.

According to the present disclosure, a UE for performing communication in a wireless communication system may be provided. The UE may include a transceiver and at least one processor coupled to the transceiver. The at least one processor may be configured to transmit, to a base station, a registration message including UE capability information. The at least one processor may be configured to receive, from the base station, an SIB including a reference identifier for performing synchronization and a domain identifier for grouping a plurality of UEs. The at least one processor may be configured to perform a sync status update based on the reference identifier and the domain identifier.

When the 5GS operates as a sync (synchronization) source and provides a sync service to the UE, it may be possible to prevent idle UEs from unnecessarily transitioning to a connected state in order to identify a sync status change. This may reduce battery consumption of the UE. In addition, it is possible to prevent congestion at the base station which may occur when the idle UEs simultaneously transition to the connected state.

### Brief Description of Drawings

FIG. 1 is a diagram illustrating a method of providing 5^{th} generation system (5GS) sync through a 3^{rd} generation partnership project (3GPP) network, according to an embodiment of the present disclosure.
FIG. 2 is a diagram illustrating a method of transmitting an event identifier (ID) to an idle user equipment (UE) when providing 5GS sync through a 3GPP network, according to an embodiment of the present disclosure.
FIG. 3 is a diagram illustrating a method of providing multi-domain 5GS sync through a 3GPP network, according to an embodiment of the present disclosure.
FIG. 4 is a diagram illustrating a method of transmitting an event ID to an idle UE when providing multi-domain 5GS sync through a 3GPP network, according to an embodiment of the present disclosure.
FIG. 5 is a diagram illustrating, in a method of transmitting an event ID to an idle UE when providing multi-domain 5GS sync through a 3GPP network, according to an embodiment of the present disclosure, a method by which an operator/application function (AF) configure a domain according to a sync threshold so as to reduce congestion.
FIG. 6 is a diagram illustrating, in a method of transmitting an event ID to an idle UE when providing multi-domain 5GS sync through a 3GPP network, according to an embodiment of the present disclosure, a method by which a user/operator/AF configure a domain according to service subscription information so as to reduce battery consumption of the UE.
FIG. 7A is a diagram illustrating a method of additionally considering a domain when a sync status changes, according to an embodiment of the present disclosure, in which a UE that has identified the same reference ID for the same domain does not perform a separate sync status update.
FIG. 7B is a diagram illustrating a method of additionally considering a domain when a sync status changes, according to an embodiment of the present disclosure, in which a UE that has identified a new reference ID for the same domain performs a separate sync status update.

### Mode for the Invention

Hereinafter, the operating principle of the present disclosure will be described in detail with reference to the accompanying drawings. In describing the present disclosure, when the detailed description of the relevant known functions or configurations is determined to unnecessarily obscure the gist of the present disclosure, the detailed description thereof may be omitted herein. Terms as used herein are those defined by taking into account the functions in the present disclosure, but the terms may vary depending on the intention of users or those of ordinary skill in the art, precedents, or the like. Therefore, the definitions should be made based on the contents throughout the specification.

Hereinafter, the operating principle of the present disclosure will be described in detail with reference to the accompanying drawings. In describing the present disclosure, when the detailed description of the relevant known functions or configurations is determined to unnecessarily obscure the gist of the present disclosure, the detailed description thereof may be omitted herein. Terms as used herein are those defined by taking into account the functions in the present disclosure, but the terms may vary depending on the intention of users or those of ordinary skill in the art, precedents, or the like. Therefore, the definitions should be made based on the contents throughout the specification.

For the same reason, some elements in the accompanying drawings are exaggerated, omitted, or schematically illustrated. In addition, the size of each element does not entirely reflect the actual size. The same reference numerals are assigned to the same or corresponding elements in the drawings.

Advantages and features of the present disclosure, and methods of achieving them will be clarified with reference to embodiments described below in detail with reference to the accompanying drawings. However, the embodiments of the present disclosure may have different forms and should not be construed as being limited to the descriptions set forth herein. Rather, these embodiments of the present disclosure are provided so that the present disclosure will be thorough and complete and will fully convey the concept of the embodiments of the present disclosure to those of ordinary skill in the art. The present disclosure is only defined by the scope of the claims. The same reference numerals denote the same elements throughout the specification.

It will be understood that the respective blocks of flowcharts and combinations of the flowcharts may be performed by computer program instructions. Because these computer program instructions may be embedded in a processor of a generic-purpose computer, a special-purpose computer, or other programmable data processing apparatuses, the instructions to be executed through the processor of the computer or other programmable data processing apparatus generate modules for performing the functions described in the flowchart block(s). Because these computer program instructions may also be stored in a computer-executable or computer-readable memory that may direct the computer or other programmable data processing apparatus so as to implement functions in a particular manner, the instructions stored in the computer-executable or computer-readable memory are also capable of producing an article of manufacture containing instruction modules for performing the functions described in the flowchart block(s). Because the computer program instructions may also be embedded in the computer or other programmable data processing apparatus, the instructions for executing the computer or other programmable data processing apparatuses by generating a computer-implemented process by performing a series of operations on the computer or other programmable data processing apparatuses may provide operations for executing the functions described in the flowchart block(s).

Also, each block may represent part of a module, segment, or code that includes one or more executable instructions for executing a specified logical function(s). It should also be noted that, in some alternative implementations, the functions described in the blocks may occur out of the order noted in the drawings. For example, two blocks illustrated in succession may in fact be executed substantially concurrently, or the blocks may sometimes be executed in a reverse order, depending on the functions involved therein.

The term "unit" as used herein refers to a software element or a hardware element such as field programmable gate array (FPGA) or application specific integrated circuit (ASIC), and the "unit" performs certain functions. However, the term "unit" is not limited to software or hardware. The term "unit" may be configured in an addressable storage medium or may be configured to reproduce one or more processors. Therefore, for example, the term "unit" includes elements, such as software elements, object-oriented software elements, class elements, and task elements, processes, functions, attributes, procedures, subroutines, segments of program code, drivers, firmware, microcodes, circuits, data, databases, data structures, tables, arrays, and variables. Functions provided in the elements and the "units" may be combined with fewer elements and "units" or may be separated into additional elements and "units." Furthermore, the elements and the "units" may be implemented to reproduce one or more central processing units (CPUs) in the device or secure multimedia card. Also, in embodiments of the present disclosure, the "unit" may include one or more processors.

In describing the present disclosure, when the detailed description of the relevant known functions or configurations is determined to unnecessarily obscure the gist of the present disclosure, the detailed description thereof may be omitted herein. Hereinafter, embodiments of the present disclosure are described in detail with reference to the accompanying drawings.

The term for identifying an access node, the term referring to network entities, the term indicating messages, the term indicating an interface between network entities, the terms indicating a variety of identification information, and the like, as used herein, are exemplified for convenience of explanation. Therefore, the present disclosure is not limited to the terms to be described below, and other terms referring to entities having an equivalent technical meaning may be used.

Hereinafter, for convenience of explanation, terms and names defined in the 5^{th} generation system (5GS) and new radio (NR) specifications, which are the latest standards defined by the 3^{rd} generation partnership project (3GPP) organization among the currently existing communication standards are used in the present disclosure. However, the present disclosure is not limited by the terms and names and may be equally applied to wireless communication networks conforming to other standards. In particular, the present disclosure may be applied to 3GPP 5GS/NR (5G mobile communication standard).

When used for applications such as smart grids, accurate time sync between UEs is required. A sync service may be provided only to a specific region. When the UE leaves this region, it may not be necessary to provide the service, or it may be necessary to apply a different type of sync service. In addition, accurate time sync between UEs is required for factory automation. Accurate time sync between UEs is also required in applications that share audio/video. Accurate time sync between UEs is also required for financial applications. For example, stock trading UEs need to perform stock sales and purchases based on accurate time sync.

In the present disclosure, an application function (AF) is responsible for control plane functions within a network and may perform a role of providing application services.

In the present disclosure, a network exposure function (NEF) may perform a role of exchanging and controlling information with external applications.

In the present disclosure, time sensitive networking (TSN) may refer to a series of standards designed to enhance real-time properties of Ethernet networks.

In the present disclosure, a session management function (SMF) may perform a role of providing connectivity between a UE and an external data network.

In the present disclosure, an access and mobility management function (AMF) may serve as a gateway through which a UE accesses a network.

In the present disclosure, a policy control function (PCF) may perform a role of managing integrated policies for overall network operations and transmitting policies to other entities.

In the present disclosure, unified data management (UDM) may perform a role of providing essential services to various network functions in response to requests.

In the present disclosure, a user data repository (UDR) may refer to a centralized database that stores and manages user-related information and data in a communication network.

In the present disclosure, a precision time protocol (PTP) may refer to a protocol that enables hardware-based time stamping.

In the present disclosure, radio resource control (RRC) may refer to a radio resource control protocol corresponding to a control plane, which is one of the protocols used when a UE and a base station communicate with each other.

In the present disclosure, a system information block (SIB) may refer to a grouping of system information elements having the same characteristics.

In the present disclosure, access stratum (AS) may refer to communication between a UE and a radio access network (RAN) with a focus on radio-related functions and signaling.

In the present disclosure, non-access stratum (NAS) may refer to a functional layer for exchanging signaling and traffic messages between a UE and a core network in a universal mobile telecommunications system (UMTS) protocol stack.

In the present disclosure, a data network name (DNN) may refer to a point at which a device connects to the Internet.

In the present disclosure, a base station, which is an entity that performs resource allocation for a UE, may be at least one of a gNode B, an eNode B, a Node B (or an xNode B, where x is an alphabet including g and e), a base station (BS), a radio access unit, a base station controller, a satellite, an airborne entity, or a node in a network, but the present disclosure is not limited thereto. The BS in the present disclosure may refer to a BS itself, a cell, or a radio unit (RU) according to interpretation, and a target for exchanging messages with a UE may be a distributed unit (DU) or a centralized unit (CU) according to a structure.

Also, in the present disclosure, the UE may include a mobile station (MS), a cellular phone, a smartphone, a computer, a vehicle, a satellite, or a multimedia system capable of performing a communication function.

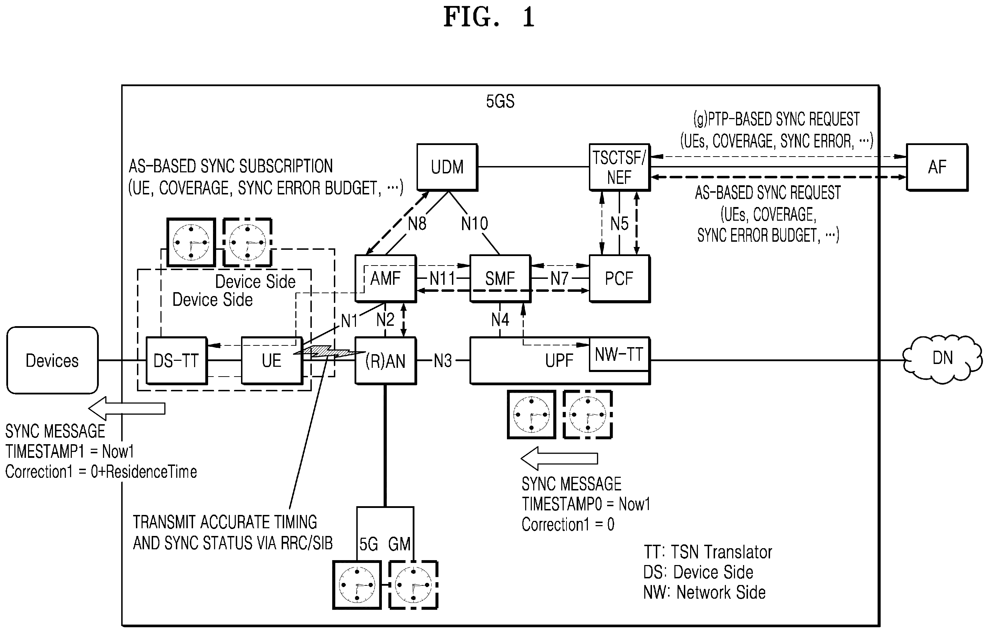

FIG. 1 is a diagram illustrating a method of providing 5GS sync through a 3GPP network, according to an embodiment of the present disclosure.

A 5GS may provide a synchronization service to a UE in response to a request from an AF. The 5GS interoperates with an external AF through a time sensitive communications and time synchronization function (TSCTSF)/network exposure function (NEF). In this case, the TSCTSF/NEF may exchange management information with a network side TSN translator (NW-TT) and a device side TSN translator (DS-TT). The NW-TT may periodically generate sync messages for synchronization and transmit the sync messages including time information to the DS-TT. In addition, the TSCTSF/NEF may interoperate with an SMF, an AMF, a PCF, and a UDM/UDR in order to transmit 5GS information to the external AF or apply requests from the external AF to the 5GS. In particular, the TSCTSF/NEF may store necessary information in the UDR and may transmit updated information to the UDM/UDR or the PCF via notification through a notification process. This method may be referred to as a (g)PTP-based sync method.

The request from the AF may be transmitted to a 5G RAN so that time synchronization between UEs is supported by adjusting RRC or a SIB. This method may be referred to as an AS-based sync method or a BS-based sync method. The AS-based sync method may increase an RRC/SIB transmission frequency for time information transmission to a level that satisfies accuracy. That is, the BS may adjust time synchronization accuracy by controlling a period at which messages for measuring delay time between a specific UE and the BS is exchanged via the RRC and measuring precise delay time. In addition, the BS may adjust time synchronization accuracy by controlling a period at which time information is transmitted by being included in information to be broadcast to all UEs via the SIB.

The AF makes a sync request based on (g)PTP or AS, but the AF is unaware of internal status information of the 5GS, such as supportable sync accuracy, the number of corresponding UEs, and an idle/active status of the relevant UE. Accordingly, even when the AF makes a request based on (g)PTP, the request may need to be processed by an AS-based 5GS sync. Even when the AF makes a request based on AS, the request may need to be processed by a (g)PTP-based 5GS sync. Alternatively, even when the AF makes a request based on NAS or AS, the request may need to be processed by both an AS-based 5GS sync and a (g)PTP-based 5GS sync.

The 5GS sync may be provided to the UDM based on subscription data. In addition to conditions such as whether each UE has been subscribed to a sync service, a sync error budget, or the like, a coverage condition may be included.

In this case, the 3GPP network may provide a sync status to the UEs in order to guarantee an accuracy level of a sync service provided by the BS. A UE in a connected state may identify a sync status through signaling between an individual UE and a BS. However, a UE in an idle state broadcasts a reference ID indicating whether there has been a change in the sync status from the BS, compares the reference ID with their own status of individual UEs, and transitions to a connected state when it is determined that an update is required, and identifies a sync status.

The 5GS includes, in the SIB, a reference ID indicating a sync status update for each cell and broadcasts the SIB to the UE. In this case, the reference ID includes a sync scope ID and an event ID, and the sync scope ID is an ID assigned to each unit that maintains the same sync status within the BS. When the UE in an RRC_Idle state moves between cells, the UE may refer only to the reference ID of the sync status broadcast via SIB. When these values are the same, there is no need to perform separate sync status update signaling. In contrast, when this value is different from a value previously known to the UE, the UE performs sync status update signaling in order to identify a new sync status.

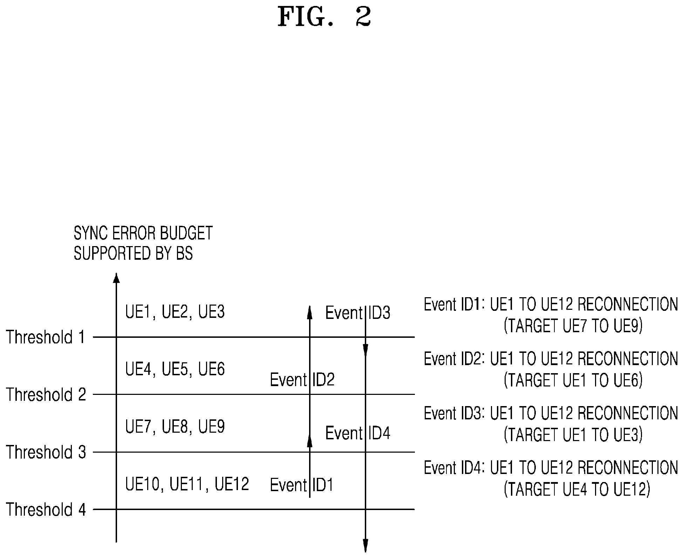

FIG. 2 is a diagram illustrating a method of transmitting an event ID to an idle UE when providing 5GS sync through a 3GPP network, according to an embodiment of the present disclosure.

A UE1, a UE2, and a UE3 ensure sync service precision requirements so that a BS-based sync service has a sync error budget less than or equal to Threshold 1.

A UE4, a UE5, and a UE6 ensure sync service precision requirements so that the BS-based sync service has a sync error budget less than or equal to Threshold 2.

A UE7, a UE8, and a UE9 ensure sync service precision requirements so that the BS-based sync service has a sync error budget less than or equal to Threshold 3.

A UE10, a UE11, and a UE12 ensure sync service precision requirements so that the BS-based sync service has a sync error budget less than or equal to Threshold 4.

When the sync status changes from Threshold 4 or more to Threshold 3 or more, the BS broadcasts the status change via the SIB by using event ID1 and notifies the UEs of the status change by using the reference ID. The reference ID includes a sync scope ID and an event ID, and the sync scope ID is an ID assigned to each unit that maintains the same sync status within the BS. In this case, because the sync status has changed from Threshold 3 or less to Threshold 3 or more, the UEs from the UE7 to the UE9 are UEs that are required to identify the sync status. However, in this case, all UEs from UE1 to UE12 transition from an idle state to a connected state and identify the sync status.

When the sync status changes from Threshold 3 or more to Threshold 1 or more, the BS broadcasts the status change via the SIB by using event ID2 and notifies the UEs of the status change by using the reference ID. In this case, because the sync status has changed from Threshold 2 or less to Threshold 2 or more and from Threshold 1 or less to Threshold 1 or more, the UE4 to the UE6 and the UE1 to the UE3 are UEs that are required to identify the sync status. However, in this case, all UEs from UE1 to UE12 transition from an idle state to a connected state and identify the sync status.

When the sync status changes from Threshold 1 or more to Threshold 1 or less, the BS broadcasts the status change via the SIB by using event ID3 and notifies the UEs of the status change by using the reference ID. In this case, because the sync status has changed from Threshold 1 or more to Threshold 1 or less, the UE1 to the UE3 are UEs that are required to identify the sync status. However, in this case, all UEs from UE1 to UE12 transition from an idle state to a connected state and identify the sync status.

When the sync status changes from Threshold 2 or more to Threshold 4 or less, the BS broadcasts the status change via the SIB by using event ID4 and notifies the UEs of the status change by using the reference ID. In this case, because the sync status has changed from Threshold 2 or more to Threshold 2 or less, from Threshold 3 or more to Threshold 3 or less, or from Threshold 4 or more to Threshold 4 or less, the UE4 to the UE6, the UE7 to the UE9, and the UE10 to the UE12 are UEs that are required to identify the sync status. However, in this case, all UEs from UE1 to UE12 transition from an idle state to a connected state and identify the sync status.

As described above, unnecessary connection status transitions between the UEs may occur. In addition, because idle UEs simultaneously transition to the connected state, congestion may occur at the BS.

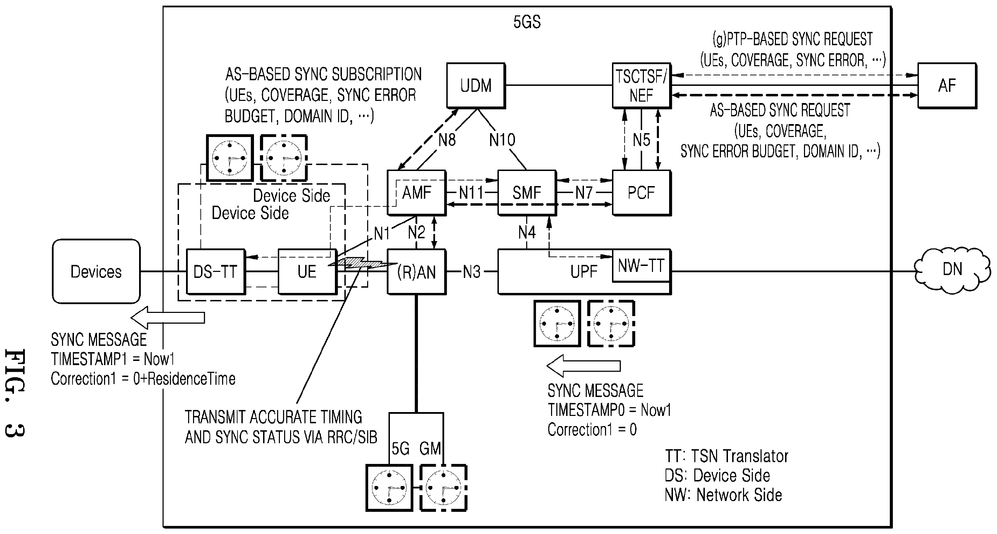

FIG. 3 is a diagram illustrating a method of providing multi-domain 5GS sync through a 3GPP network, according to an embodiment of the present disclosure.

A 5GS may provide a sync service to a UE in response to a request from an AF. The 5GS interoperates with an external AF through a TSCTSF/NEF. In this case, the TSCTSF/NEF may exchange management information with an NW-TT and a DS-TT. The NW-TT may periodically generate sync messages for synchronization and transmit the sync messages including time information to the DS-TT. In addition, the TSCTSF/NEF may interoperate with an SMF, an AMF, a PCF, and a UDM/UDR in order to transmit 5GS information to the external AF or apply requests from the external AF to the 5GS. In particular, the TSCTSF/NEF may store necessary information in the UDR and may transmit updated information to the UDM/UDR or the PCF via notification through a notification process. This method may be referred to as a (g)PTP-based sync method.

The request from the AF may be transmitted to a 5G RAN so that time synchronization between UEs is supported by adjusting RRC or a SIB. This method may be referred to as an AS-based sync method. An RRC/SIB transmission frequency for time information transmission may be increased to a level that satisfies accuracy. The BS may adjust time synchronization accuracy by controlling a period at which messages for measuring delay time between a specific UE and the BS is exchanged via the RRC and measuring precise delay time. In addition, the BS may adjust time synchronization accuracy by controlling a period at which time information is transmitted by being included in information to be broadcast to all UEs via the SIB.

The AF makes a sync request based on (g)PTP or AS, but the AF is unaware of internal status information of the 5GS, such as supportable sync accuracy, the number of corresponding UEs, and an idle/active status of the relevant UE. Accordingly, even when the AF makes a request based on (g)PTP, the request may need to be processed by an AS-based 5GS sync. Even when the AF makes a request based on AS, the request may need to be processed by a (g)PTP-based 5GS sync. Alternatively, even when the AF makes a request based on NAS or AS, the request may need to be processed by both an AS-based 5GS sync and a (g)PTP-based 5GS sync. In this case, it is possible to add a domain ID to indicate to which group the UE belongs among the groups of multiple UEs.

The 5GS sync may be provided to the UDM based on subscription data. In addition to conditions such as whether each UE has been subscribed to a sync service, a sync error budget, or the like, a coverage condition may be included. In this case, it is possible to add a domain ID to indicate to which group the UE belongs among the groups of multiple UEs.

In this case, the 3GPP network may provide a sync status to the UEs in order to guarantee an accuracy level of a sync service provided by the BS. A UE in a connected state may identify a sync status through signaling between an individual UE and a BS. However, a UE in an idle state broadcasts a reference ID indicating whether there has been a change in the sync status from the BS, compares the reference ID with their own status of individual UEs, and transitions to a connected state when it is determined that an update is required, and identifies a sync status. In this case, it is possible to add a domain ID to indicate to which group the UE belongs among the groups of multiple UEs.

The 5GS includes, in the SIB, a reference ID indicating a sync status update for each cell and broadcasts the SIB to the UE. In this case, the reference ID includes a sync scope ID and an event ID, and the sync scope ID is an ID assigned to each unit that maintains the same sync status within the BS. When the UE in an RRC_Idle state moves between cells, the UE may refer only to the reference ID of the sync status broadcast via SIB. When these values are the same, there is no need to perform separate sync status update signaling. In contrast, when this value is different from a value previously known to the UE, the UE performs sync status update signaling in order to identify a new sync status.

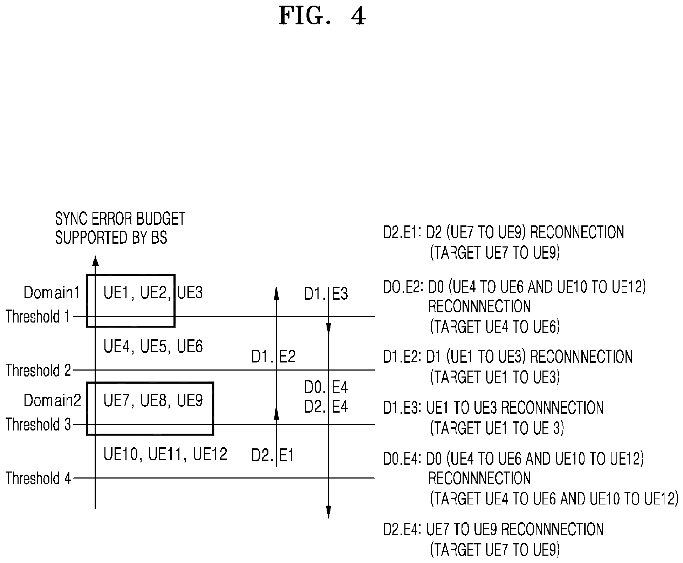

FIG. 4 is a diagram illustrating a method of transmitting an event ID to an idle UE when providing multi-domain 5GS sync through a 3GPP network, according to an embodiment of the present disclosure.

A UE1, a UE2, and a UE3 ensure sync service precision requirements so that a BS-based sync service has a sync error budget less than or equal to Threshold 1.

A UE4, a UE5, and a UE6 ensure sync service precision requirements so that the BS-based sync service has a sync error budget less than or equal to Threshold 2.

A UE7, a UE8, and a UE9 ensure sync service precision requirements so that the BS-based sync service has a sync error budget less than or equal to Threshold 3.

A UE10, a UE11, and a UE12 ensure sync service precision requirements so that the BS-based sync service has a sync error budget less than or equal to Threshold 4.

In addition, the UE1 and the UE2 belong to Domain1, and the UE7, the UE8, and the UE9 belong to Domain2. The remaining UE3 to UE6 and UE10 to UE12 belong to Domain0 or a default domain.

When the sync status changes from Threshold 4 or more to Threshold 3 or more, the BS broadcasts the status change via the SIB by using event ID1 and notifies the UEs of the status change by using the reference ID together with the target domain. In this case, Domain2 and Event ID1 of D2, E1 are broadcast by being included in the SIB. In this case, because the sync status has changed from Threshold 3 or less to Threshold 3 or more, the UE7 to the UE9 are UEs that are required to identify the sync status. Because the target is designated as Domain2, only the UE7 to the UE9 transition from an idle state to a connected state and identify the sync status. When the 5GS operates as a synchronization source and provides a sync service to the UE, it may be possible to prevent idle UEs from unnecessarily transitioning to a connected state in order to identify a change in sync status. This may reduce battery consumption of the UE. In addition, it is possible to prevent congestion at the BS that may occur when the idle UEs simultaneously transition to the connected state.

When the sync status changes from Threshold 3 or more to Threshold 1 or more, the BS broadcasts the status change via the SIB by using event ID2 and notifies the UEs of the status change by using the reference ID together with the target domain. In this case, D0 and E2, and D1 and E2, that is, Domain0 (default domain), Domain1, and Event ID2 are broadcast by being included in the SIB. In this case, because the sync status has changed from Threshold 2 or less to Threshold 2 or more and from Threshold 1 or less to Threshold 1 or more, the UE4 to the UE6 and the UE1 to the UE3 are UEs that are required to identify the sync status. The UE1 and the UE2 of the target Domain1 and the UE3 to the UE6 and the UE10 to the UE12 of Domain0 (default domain) all transition from an idle state to a connected state and identify the sync status. It may be possible to prevent the UE7 to the UE9 belonging to Domain2 from unnecessarily transitioning to the connected state in order to identify the change in sync status. This may reduce battery consumption of the UE. In addition, it is possible to prevent congestion at the BS that may occur when the idle UEs simultaneously transition to the connected state.

When the sync status changes from Threshold 1 or more to Threshold 1 or less, the BS broadcasts the status change via the SIB by using event ID3 and notifies the UEs of the status change by using the reference ID together with the target domain. In this case, D1 and E3, that is, Domain1 and Event ID3 are broadcast by being included in the SIB. In this case, because the sync status has changed from Threshold 1 or more to Threshold 1 or less, the UE1 to the UE3 are UEs that are required to identify the sync status. The UE1 and UE2, which are the UEs of the target Domain1, and the UE3 to the UE6 and the UE10 to the UE12, which are the UEs of Domain0 (default domain), all transition from an idle state to a connected state and identify the sync status. It may be possible to prevent the UE7 to the UE9 belonging to Domain2 from unnecessarily transitioning to the connected state in order to identify the change in sync status. This may reduce battery consumption of the UE. In addition, it is possible to prevent congestion at the BS that may occur when the idle UEs simultaneously transition to the connected state.

When the sync status changes from Threshold 2 or more to Threshold 4 or less, the BS broadcasts the status change via the SIB by using event ID4 and notifies the UEs of the status change by using the reference ID together with the target domain. In this case, D0 and E4, and D2 and E4, that is, Domain0 (default domain), Domain2, and Event ID4 are broadcast by being included in the SIB. In this case, because the sync status has changed from Threshold 2 or more to Threshold 2 or less, from Threshold 3 or more to Threshold 3 or less, or from Threshold 4 or more to Threshold 4 or less, the UE4 to the UE6, the UE7 to the UE9, and the UE10 to the UE12 are UEs that are required to identify the sync status. Because the target is designated as Domain2, the UE7 to the UE9 transition from an idle state to a connected state and identify the sync status. In addition, because Domain0 is also designated, the UE3 to the UE6 and the UE10 to the UE12 also transition from an idle state to a connected state and identify the sync status. It may be possible to prevent the UE1 and the UE2 belonging to Domain1 from unnecessarily transitioning to the connected state in order to identify the change in sync status. This may reduce battery consumption of the UE. In addition, it is possible to prevent congestion at the BS that may occur when the idle UEs simultaneously transition to the connected state.

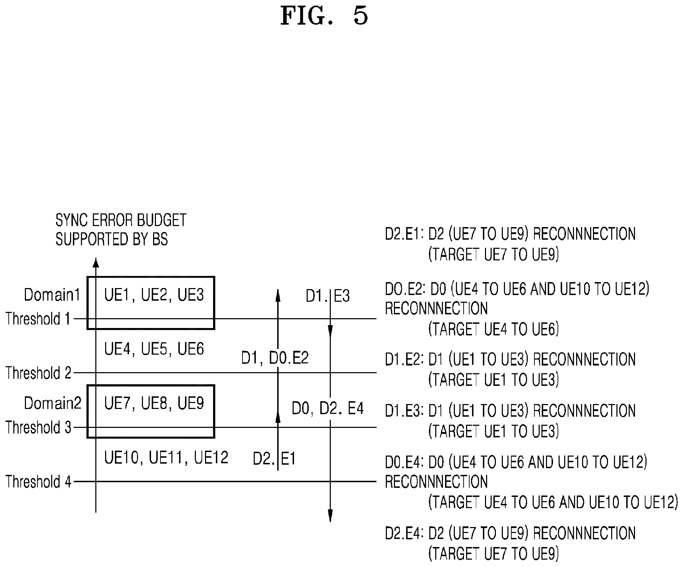

FIG. 5 is a diagram illustrating, in a method of transmitting an event ID to an idle UE when providing multi-domain 5GS sync through a 3GPP network, according to an embodiment of the present disclosure, a method by which an operator/AF configure a domain according to a sync threshold so as to reduce congestion.

The operator or the AF may assign domains to UEs for the purpose of grouping and distributing the UEs to prevent congestion at the BS. In this case, the UEs may be divided and assigned to the same domain based on the thresholds of the sync error budget for which the event ID is generated. For example, a UE1, a UE2, and a UE3 based on Threshold 1 may be assigned to Domain 1, and a UE7, a UE8, and a UE9 based on Threshold 3 may be assigned to Domain 2. A UE4 to a UE6 and a UE10 to a UE12 based on Threshold 2 or Threshold 4, which is the remaining thresholds, may be assigned to Domain 0 or the default domain.

A UE1, a UE2, and a UE3 ensure sync service precision requirements so that a BS-based sync service has a sync error budget less than or equal to Threshold 1.

The UE4, the UE5, and the UE6 ensure sync service precision requirements so that the BS-based sync service has a sync error budget less than or equal to Threshold 2.

A UE7, a UE8, and a UE9 ensure sync service precision requirements so that the BS-based sync service has a sync error budget less than or equal to Threshold 3.

The UE10, a UE11, and a UE12 ensure sync service precision requirements so that the BS-based sync service has a sync error budget less than or equal to Threshold 4.

When the sync status changes from Threshold 4 or more to Threshold 3 or more, the BS broadcasts the status change via the SIB by using event ID1 and notifies the UEs of the status change by using the reference ID together with the target domain. In this case, Domain2 and Event ID1 of D2, E1 are broadcast by being included in the SIB. In this case, because the sync status has changed from Threshold 3 or less to Threshold 3 or more, the UE7 to the UE9 are UEs that are required to identify the sync status. Because the target is designated as Domain2, only the UE7 to the UE9 transition from an idle state to a connected state and identify the sync status. When the 5GS operates as a synchronization source and provides a sync service to the UE, it may be possible to prevent idle UEs from unnecessarily transitioning to a connected state in order to identify a change in sync status. This may reduce battery consumption of the UE. In addition, it is possible to prevent congestion at the BS that may occur when the idle UEs simultaneously transition to the connected state.

When the sync status changes from Threshold 3 or more to Threshold 1 or more, the BS broadcasts the status change via the SIB by using event ID2 and notifies the UEs of the status change by using the reference ID together with the target domain. In this case, D0 and E2, and D1 and E2, that is, Domain0 (default domain), Domain1, and Event ID2 are broadcast by being included in the SIB. In this case, because the sync status has changed from Threshold 2 or less to Threshold 2 or more and from Threshold 1 or less to Threshold 1 or more, the UE4 to the UE6 and the UE1 to the UE3 are UEs that are required to identify the sync status. The UE1 to the UE3 of the target Domain1 and the UE4 to the UE6 and the UE10 to the UE12 of Domain0 (default domain) all transition from an idle state to a connected state and identify the sync status. It may be possible to prevent the UE7 to the UE9 belonging to Domain2 from unnecessarily transitioning to the connected state in order to identify the change in sync status. This may reduce battery consumption of the UE. In addition, it is possible to prevent congestion at the BS that may occur when the idle UEs simultaneously transition to the connected state.

When the sync status changes from Threshold 1 or more to Threshold 1 or less, the BS broadcasts the status change via the SIB by using event ID3 and notifies the UEs of the status change by using the reference ID together with the target domain. In this case, D1 and E3, that is, Domain1 and Event ID3 are broadcast by being included in the SIB. In this case, because the sync status has changed from Threshold 1 or more to Threshold 1 or less, the UE1 to the UE3 are UEs that are required to identify the sync status. The UE1 to the UE3, which are the UEs of the target Domain1, transition from an idle state to a connected state and identify the sync status. It may be possible to prevent the UE7 to the UE9 belonging to Domain2 from unnecessarily transitioning to the connected state in order to identify the change in sync status. This may reduce battery consumption of the UE. In addition, it is possible to prevent congestion at the BS that may occur when the idle UEs simultaneously transition to the connected state.

When the sync status changes from Threshold 2 or more to Threshold 4 or less, the BS broadcasts the status change via the SIB by using event ID4 and notifies the UEs of the status change by using the reference ID together with the target domain. In this case, D0 and E4, and D2 and E4, that is, Domain0 (default domain), Domain2, and Event ID4 are broadcast by being included in the SIB. In this case, because the sync status has changed from Threshold 2 or more to Threshold 2 or less, from Threshold 3 or more to Threshold 3 or less, or from Threshold 4 or more to Threshold 4 or less, the UE4 to the UE6, the UE7 to the UE9, and the UE10 to the UE12 are UEs that are required to identify the sync status. Because the target is designated as Domain2, the UE7 to the UE9 transition from an idle state to a connected state and identify the sync status. In addition, because Domain0 is also designated, the UE3 to the UE6 and the UE10 to the UE12 also transition from an idle state to a connected state and identify the sync status. It may be possible to prevent the UE1 to the UE3 belonging to Domain1 from unnecessarily transitioning to the connected state in order to identify the change in sync status. This may reduce battery consumption of the UE. In addition, it is possible to prevent congestion at the BS that may occur when the idle UEs simultaneously transition to the connected state.

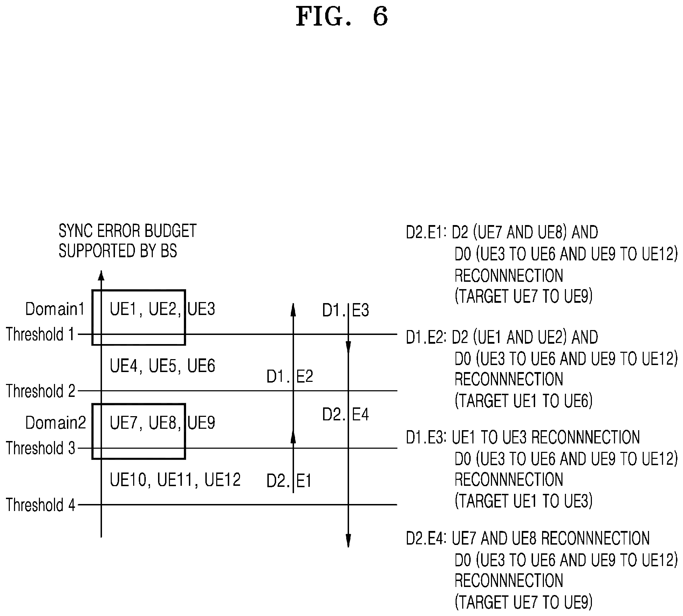

FIG. 6 is a diagram illustrating, in a method of transmitting an event ID to an idle UE when providing multi-domain 5GS sync through a 3GPP network, according to an embodiment of the present disclosure, a method by which a user/operator/AF configure a domain according to service subscription information so as to reduce battery consumption of the UE.

The operator or the AF may assign domains to the UEs by grouping the UEs for an additional service that reduces battery consumption of the UEs by preventing unnecessary transitions from an idle state to a connected state for identifying a sync status for a synchronization service. In this case, domain assignment may be performed based on whether the UE has been subscribed to the corresponding service. For example, a UE1 and a UE2 having been subscribed to a battery saving service among UEs based on Threshold 1 may be assigned to Domain1, and a UE7 and a UE8 having been subscribed to the battery saving service among UEs based on Threshold 3 may be assigned to Domain2. A UE3 to a UE6 and a UE9 to a UE12, which are the remaining UEs, may be assigned to Domain0 or the default domain.

The UE1, the UE2, and the UE3 ensure sync service precision requirements so that a BS-based sync service has a sync error budget less than or equal to Threshold 1.

The UE4, the UE5, and the UE6 ensure sync service precision requirements so that the BS-based sync service has a sync error budget less than or equal to Threshold 2.

The UE7, the UE8, and the UE9 ensure sync service precision requirements so that the BS-based sync service has a sync error budget less than or equal to Threshold 3.

The UE10, the UE11, and the UE12 ensure sync service precision requirements so that the BS-based sync service has a sync error budget less than or equal to Threshold 4.

When the sync status changes from Threshold 4 or more to Threshold 3 or more, the BS broadcasts the status change via the SIB by using event ID1 and notifies the UEs of the status change by using the reference ID together with the target domain. In this case, D2 and E1, and D0 and E1, that is, Domain2, Domain0, and Event ID1 are broadcast by being included in the SIB. Alternatively, only D2 and E1 may be included while D0 is omitted, and the operation may be performed by always including D0 in the target. In this case, because the sync status has changed from Threshold 3 or less to Threshold 3 or more, the UE7 to the UE9 are UEs that are required to identify the sync status. Because the target is designated as Domain2, the UE7 and the UE8 transition from an idle state to a connected state and identify the sync status. In addition, the UE9 to the UE12 and the UE3 to the UE6, which are the UEs of Domain0, also transition from an idle state to a connected state and identify the sync status. When the 5GS operates as a synchronization source and provides a sync service to the UE1 and the UE2, which are the UEs of Domain1, it may be possible to prevent idle UEs from unnecessarily transitioning to a connected state in order to identify a change in sync status.

When the sync status changes from Threshold 3 or more to Threshold 1 or more, the BS broadcasts the status change via the SIB by using event ID2 and notifies the UEs of the status change by using the reference ID together with the target domain. In this case, D0 and E2, and D1 and E2, that is, Domain0 (default domain), Domain1, and Event ID2 are broadcast by being included in the SIB. Alternatively, only D1 and E2 may be included while D0 is omitted, and the operation may be performed by always including D0 in the target. In this case, because the sync status has changed from Threshold 2 or less to Threshold 2 or more and from Threshold 1 or less to Threshold 1 or more, the UE4 to the UE6 and the UE1 to the UE3 are UEs that are required to identify the sync status. The UE1 and the UE2 of the target Domain1 and the UE3 to the UE6 and the UE9 to the UE12 of Domain0 (default domain) all transition from an idle state to a connected state and identify the sync status. It may be possible to prevent the UE7 and the UE8 belonging to Domain2 from unnecessarily transitioning to the connected state in order to identify the change in sync status. This may reduce battery consumption of the UE.

When the sync status changes from Threshold 1 or more to Threshold 1 or less, the BS broadcasts the status change via SIB by using Event ID3 and notifies the UEs by using the reference ID together with the target domain (Domain0). In this case, D1 and E3, and D0 and E3, i.e., Domain1, Domain0, and Event ID3 are broadcast by being included in the SIB. Alternatively, only D1 and E2 may be included while D0 is omitted, and the operation may be performed by always including D0 in the target. In this case, because the sync status has changed from Threshold 1 or more to Threshold 1 or less, the UE1 to the UE3 are UEs that are required to identify the sync status. The UE1 and the UE2, which are the UEs of the target Domain1, transition from an idle state to a connected state and identify the sync status. In addition, the UE3 to the UE6 and the UE9 to the UE12 of Domain0 (default domain) all transition from an idle state to a connected state and identify the sync status. It may be possible to prevent the UE7 and the UE8 belonging to Domain2 from unnecessarily transitioning to the connected state in order to identify the change in sync status. This may reduce battery consumption of the UE.

When the sync status changes from Threshold 2 or more to Threshold 4 or less, the BS broadcasts the status change via the SIB by using event ID4 and notifies the UEs of the status change by using the reference ID together with the target domain. In this case, D0 and E4, and D2 and E4, that is, Domain0 (default domain), Domain2, and Event ID4 are broadcast by being included in the SIB. Alternatively, only D1 and E2 may be included while D0 is omitted, and the operation may be performed by always including D0 in the target. In this case, because the sync status has changed from Threshold 2 or more to Threshold 2 or less, from Threshold 3 or more to Threshold 3 or less, or from Threshold 4 or more to Threshold 4 or less, the UE4 to the UE6, the UE7 to the UE9, and the UE10 to the UE12 are UEs that are required to identify the sync status. Because the target is designated as Domain2, the UE7 and the UE8 transition from an idle state to a connected state and identify the sync status. In addition, because Domain0 is also designated, the UE3 to the UE6 and the UE9 to the UE12 also transition from an idle state to a connected state and identify the sync status. It may be possible to prevent the UE1 and the UE2 belonging to Domain1 from unnecessarily transitioning to the connected state in order to identify the change in sync status. This may reduce battery consumption of the UE.

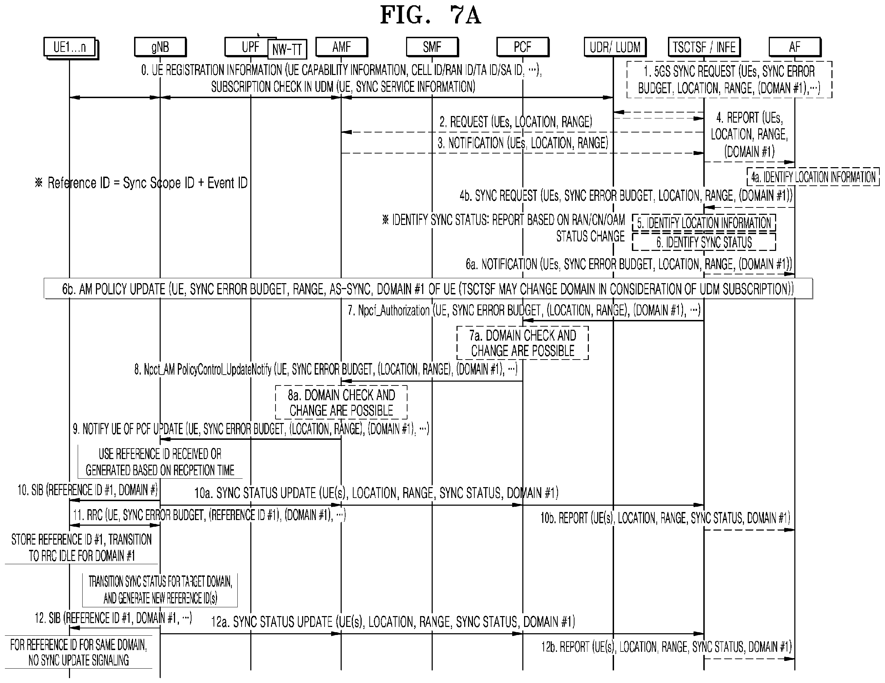

FIG. 7A illustrates a method of additionally considering a domain when a sync status changes, according to an embodiment of the present disclosure, in which a UE that has identified the same reference ID for the same domain does not perform a separate sync status update.

In operation 0, the UE sends registration information including UE capability information indicating that a 5GS synchronization service may be supported for the UE. At this time, a cell ID, a RAN ID, a timing advance (TA) ID, and a standalone (SA) ID where the UE is located may be included. The RAN ID, the TA ID, or the SA ID may be derived from the cell ID. At this time, the UDM may determine whether the UE has been subscribed to a service for receiving the 5GS synchronization service. Subscription information may include requirements such as the UE or sync error bound, coverage conditions, etc. In addition, the AMF may identify whether the UDM/UDR and the target UE have been subscribed to the sync service. At this time, the subscription information may include a sync error budget and a domain.

In operation 1, the AF may send a 5GS sync request for target UEs to the TSCTSF/NEF. The request includes the required synchronization accuracy as the sync error budget. In addition, the coverage to which the synchronization service is to be applied may be specified by a location or a range. The indication of the target UE may be represented by a UE ID list, a group ID, or a data network name (DNN)/single network slice selection assistance information (S-NSSAI). In addition, a domain for the synchronization service may be designated.

The TSCTSF/NEF may identify whether the UDM/UDR and the target UE have been subscribed to the sync service. At this time, sync service subscription information received by the UDM/UDR may include a sync error budget and a domain. Whether to permit the AF request may be determined by comparing the sync error budget requested by the AF with the sync error budget permitted by the UDM. In addition, whether to permit the AF request may be determined by comparing the domain requested by the AF with the sync domain permitted by the UDM, or mapping to new sync domains may be performed for subsequent service applications.

In operation 2, the TSCTSF/NEF may request the AMF to notify location and range information of target UEs. At this time, the location/range may be converted into and utilized as a RAN ID, a TA ID, an SA ID, or a Cell ID, which is identifiable in 3GPP.

In operation 3, the AMF may notify the TSCTSF/AMF of the location and range information of the UE.

In operation 4, the TSCTSF/NEF may report the location and range information of the corresponding UE to the AF. A result of determining whether to permit the AF request by comparing the sync error budget requested by the AF with the sync error budget permitted by the UDM, as identified in operation 1a, may be included. In addition, a result of determining whether to permit the AF request by comparing the domain requested by the AF with the sync domain permitted by the UDM, or performing mapping to new sync domains, as identified in operation 1a, may be included.

In operation 4a, the AF may determine whether the location information of the UE satisfies the requirements. Domain information newly assigned by the 5GS may be stored for subsequent use.

In operation 4b, the AF may send a 5GS sync request for the UE to the TSCTSF/NEF.

In operation 5, the TSCTSF/NEF may determine whether the location information of the UE satisfies the requirements.

In operation 6, the TSCTSF/NEF may receive an input indicating a sync status change from the RAN/CN/OAM and determine whether to perform a sync status update. An input indicating a sync status change in the RAN may be generated due to congestion occurring in a specific region, and an input indicating a sync status change may be generated from the CN so as to update a sync status of a specific UE based on a report received from the UPF after interaction between the UE and the UPF. In addition, an input indicating a sync status change may be generated from the OAM when the OAM detects an abnormal condition of a specific RAN or a CN, etc., and the OAM requests a sync status change. The TSCTSF/NEF may determine whether to perform a sync status update by aggregating these inputs.

In operation 6a, the TSCTSF/NEF may notify the AF of a current status by reflecting the changed sync status in the AF.

In operation 6b, whether to permit the AF request may be determined by comparing the domain requested by the AF with the sync domain permitted by the UDM, or mapping to new sync domains may be performed for subsequent service applications. At this operation, the UE stores its own sync domain and uses the stored sync domain to identify a subsequent sync status.

In operation 7, the TSCTSF/NEF may transmit a 5GS sync request for the UE to the PCF. At this time, the request includes the required synchronization accuracy as the sync error budget. In addition, the coverage to which the synchronization service is to be applied may be specified by a location or a range. At this time, the sync request may include a reference ID (e.g. #1) indicating a sync status transmission timing or event. In addition, the sync request may include a sync domain.

In operation 8, the PCF may transmit, to the AMF, a 5GS sync request for a UE that satisfies a location or range condition. At this time, the request includes the required synchronization accuracy as the sync error budget. In addition, the coverage to which the synchronization service is to be applied may be specified by a location or a range. At this time, the sync request may include a reference ID (e.g. #1) indicating a sync status transmission timing or event. The reference ID may be received from the TSCTSF or may be generated by the PCF. In addition, the sync request may include a sync domain.

In operation 8a, the AMF may determine whether the location information of the UE satisfies the requirements.

In operation 9, the AMF requests a gNB to apply synchronization accuracy to a UE that satisfies the condition. At this time, the synchronization accuracy is included as the sync error budget. At this time, a request is sent simultaneously to all gNBs corresponding to the coverage condition, i.e., gNB1 and gNB2. At this time, the request may include a reference ID (e.g. #1) indicating a sync status transmission timing or event. The reference ID may be received from the TSCTSF or may be generated by the PCF. In addition, the request may include a sync domain.

In this operation, each gNB may perform adjustment to satisfy time synchronization accuracy requirements of the UE by increasing/decreasing an SIB period based on the sync error budget information received from the 5GC or increasing/decreasing a delay time measurement period between the BS and the UE in order to measure an RRC TA value with each UE.

In addition, each gNB may store the reference ID (e.g., #1) indicating the sync status transmission timing or event, or may directly generate and store the reference ID based on the time at which the information has been received. Each gNB periodically broadcasts the reference ID by including the reference ID in the SIB. Each gNB may assign the same group ID to gNBs having the same sync status, generate a reference ID including the group ID, and periodically broadcast the reference ID by including the reference ID in the SIB. In addition, at this time, the gNB may additionally include a sync domain in the information to be broadcast. A method of generating the domain and the reference ID is the same as the examples of FIGS. 4, 5, and 6.

In operation 10, the UE receives the SIB from a camping gNB. At this time, it is confirmed that reference ID #1 included in the SIB is a new value. The UE may store a plurality of latest reference IDs and use the plurality of latest reference IDs for comparison. In addition, at this time, the SIB may include a sync domain.

In operation 10a, the gNB may transmit sync status change information to the TSCTSF through the AMF and the PCF. At this time, the sync status change information may include a sync domain.

In operation 10b, the TSCTSF/NEF may report the information received in operation 10a to the AF.

In operation 11, the UE receives a detailed sync status by performing RRC signaling with the gNB. At this time, the RRC signaling may include a sync domain. The UE stores #1, which is the reference ID of the most recently performed sync status update. The UE may store the domain. Thereafter, when there is no traffic for a certain period of time, the UE transitions to an RRC_Idle state.

In operation 12, the UE receives the SIB from a camping gNB. When the domain included in the SIB matches its own domain, reference ID #1 included in the SIB is the same value as the previously stored value, and thus, no separate sync status update is performed. When using the domain setting method as in FIG. 6, the UE of Domain0 may always determine whether the reference ID #1 included in the SIB is the same as the previously stored value, depending on the setting, even when the domain is not included in the SIB.

In operation 12a, the gNB may transmit sync status change information to the TSCTSF through the AMF and the PCF. At this time, the sync status change information may include a sync domain.

In operation 12b, the TSCTSF/NEF may report the information received in operation 12a to the AF.

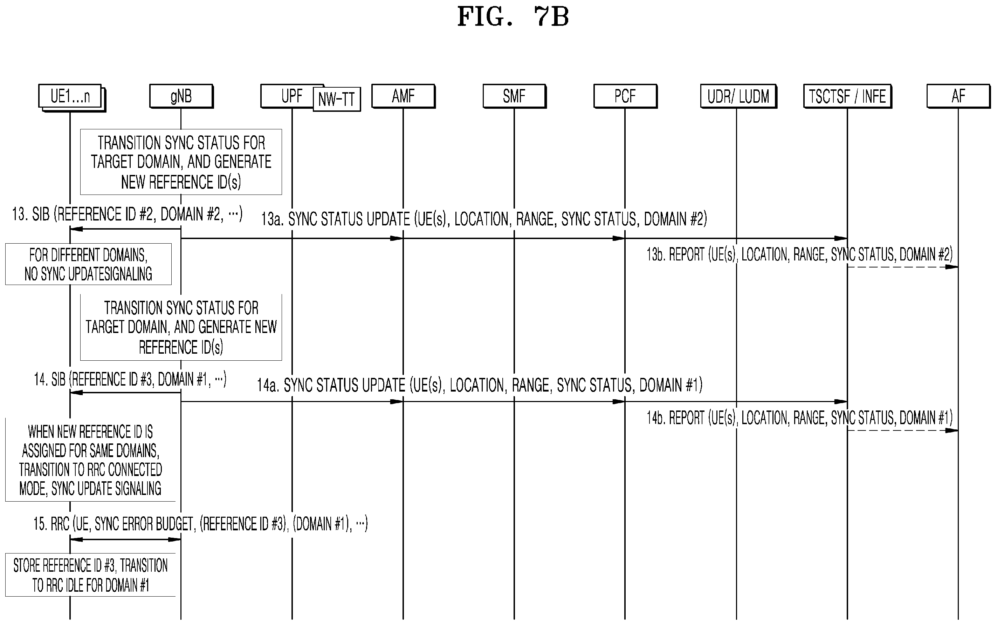

FIG. 7B is a diagram illustrating a method of additionally considering a domain when a sync status changes, according to an embodiment of the present disclosure, in which a UE that has identified a new reference ID for the same domain performs a separate sync status update.

In operation 13, the gNB generates a new reference ID for the target domains by reflecting the change in sync status and broadcasts the new reference ID via the SIB. In this case, a method of generating the domain and the reference ID is the same as the examples of FIGS. 4, 5, and 6.

The UE receives the SIB from a camping gNB. When the domain included in the SIB does not match its own domain, no separate sync status update is performed even when reference ID #2 included in the SIB is determined as a new value as a result of comparison with the previously stored value. When using the domain setting method as in FIG. 6, the UE of Domain0 may always determine whether the reference ID #2 included in the SIB is the same as the previously stored value, depending on the setting, even when the domain is not included in the SIB.

In operation 13a, the gNB may transmit sync status change information to the TSCTSF through the AMF and the PCF. At this time, the sync status change information may include a sync domain.

In operation 13b, the TSCTSF/NEF may report the information received in operation 13a to the AF.

In operation 14, the gNB generates a new reference ID for the target domains by reflecting the change in sync status and broadcasts the new reference ID via the SIB. In this case, a method of generating the domain and the reference ID is the same as the examples of FIGS. 4, 5, and 6.

The UE receives the SIB from a camping gNB. When the domain included in the SIB matches its own domain, the UE transitions to an RRC_Connected state to perform the sync status update because the Reference ID #3 included in the SIB is a new value as a result of comparison with the previously stored value. When using the domain setting method as in FIG. 6, the UE of Domain0 may always determine whether the reference ID #3 included in the SIB is the same as the previously stored value, depending on the setting, even when the domain is not included in the SIB.

In operation 14a, the gNB may transmit sync status change information to the TSCTSF through the AMF and the PCF. At this time, the sync status change information may include a sync domain.

In operation 14b, the TSCTSF/NEF may report the information received in operation 13a to the AF.

In operation 15, the UE receives a detailed sync status by performing RRC signaling with the gNB. At this time, a sync domain may be included. The UE stores #3, which is the reference ID of the most recently performed sync status update. The UE may store the domain. Thereafter, when there is no traffic for a certain period of time, the UE transitions to an RRC_Idle state.

The methods according to the embodiments of the present disclosure, which are described in the claims or the detailed description, may be implemented as hardware, software, or a combination of hardware and software.

When implemented as software, a computer-readable storage medium storing one or more programs (software modules) may be provided. One or more programs stored in the computer-readable storage medium are configured to be executable by one or more processors in an electronic device. One or more programs include instructions that cause the electronic device to execute the methods according to the embodiments of the present disclosure, which are described in the claims or the specification of the present disclosure.

The programs (software modules, software, etc.) may be stored in random access memory (RAM), non-volatile memory including flash memory, read-only memory (ROM), electrically erasable programmable read-only memory (EEPROM), magnetic disc storage devices, compact disc-ROM (CD-ROM), digital versatile discs (DVDs) or other types of optical storage devices, or magnetic cassette. Alternatively, the programs may be stored in memory provided by a combination of all or part of these devices. In addition, the memory may include a plurality of configuration memories.

Furthermore, the programs may be stored in attachable storage devices that are accessible through a communication network, such as Internet, Intranet, local area network (LAN), wide LAN (WLAN), or storage area network (SAN), or a communication network provided by a combination thereof. These storage devices may be connected through an external port to a device that performs the embodiment of the present disclosure. Moreover, a separate storage device on the communication network may access the device that performs the embodiment of the present disclosure.

In specific embodiments of the present disclosure, the elements included in the present disclosure have been expressed in the singular or plural form according to the suggested specific embodiments. However, the expression in the singular or plural form is appropriately selected according to the suggested situations for convenience of explanation and is not intended to limit the present disclosure to the single or plural elements. Even when a certain element is expressed in the plural form, it may be provided with a single element, and even when a certain element is expressed in the singular form, it may be provided with a plurality of elements.

On the other hand, although specific embodiments have been described in the detailed description of the present disclosure, various modifications may be made thereto without departing from the scope of the present disclosure. Therefore, the scope of the present disclosure should not be limited to the described embodiments and should be defined by the following claims and the equivalents thereto.

According to an embodiment of the present disclosure, a method, performed by a UE, of performing communication may include transmitting, to a base station, a registration message including UE capability information. The method may include receiving, from the base station, a synchronization information block (SIB) including a reference identifier for performing synchronization and a domain identifier for grouping a plurality of UEs. The method may include performing a sync status update based on the reference identifier and the domain identifier.

In an embodiment, the reference identifier may include an event identifier indicating whether an event has occurred in a sync status and a scope identifier indicating units having a same sync status.

In an embodiment, the performing of the sync status update may include performing no sync status update in case that the domain identifier is different from a domain identifier of a domain in which the UE is included.

In an embodiment, the performing of the sync status update may include performing no sync status update in case that the domain identifier is identical to a domain identifier of a domain in which the UE is included and the reference identifier is identical to a reference identifier stored by the UE.

In an embodiment, the performing of the sync status update may include performing the sync status update in case that the domain identifier is identical to a domain identifier of a domain in which the UE is included and the reference identifier is different from a reference identifier stored by the UE.

In an embodiment, the performing of the sync status update may include performing a transition to an RRC_Connected state with the base station. The method may include receiving, from the base station, an RRC message including information about a sync status.

In an embodiment, the method may include storing the reference identifier and the domain identifier. The method may include performing a transition to an RRC_Idle state with the base station.

According to an embodiment of the present disclosure, a method, performed by a base station, performing communication may include receiving, from a UE, a registration message including UE capability information. The method may include transmitting, to the UE, an SIB including a reference identifier for performing synchronization and a domain identifier for grouping a plurality of UEs. The method may include performing a sync status update of the UE based on the reference identifier and the domain identifier.

According to an embodiment of the present disclosure, a UE for performing communication in a wireless communication system may be provided. The UE may include a transceiver and at least one processor coupled to the transceiver. The at least one processor may be configured to transmit, to a base station, a registration message including UE capability information. The at least one processor may be configured to receive, from the base station, an SIB including a reference identifier for performing synchronization and a domain identifier for grouping a plurality of UEs. The at least one processor may be configured to perform a sync status update based on the reference identifier and the domain identifier.

A machine-readable storage medium may be provided in the form of a non-transitory storage medium. The "non-transitory storage medium" is a tangible device and only means not including a signal (e.g., electromagnetic waves). This term does not distinguish between a case where data is semi-permanently stored in a storage medium and a case where data is temporarily stored in a storage medium. For example, the "non-transitory storage medium" may include a buffer in which data is temporarily stored.

The methods according to various embodiments may be provided by being included in a computer program product. The computer program product may be traded between a seller and a buyer as commodities. The computer program product may be distributed in the form of a machine-readable storage medium (e.g., compact disc read-only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or memory of a relay server, or may be temporarily generated.

## Claims

1. A method, performed by a user equipment (UE), of performing communication in a wireless communication system, the method comprising:
transmitting, to a base station, a registration message including UE capability information;
receiving, from the base station, a synchronization information block (SIB) including a reference identifier for performing synchronization and a domain identifier for grouping a plurality of UEs; and
performing a sync status update based on the reference identifier and the domain identifier.

2. The method of claim 1, wherein the reference identifier includes an event identifier indicating whether an event has occurred in a sync status and a scope identifier indicating units having a same sync status.

3. The method of claim 1, wherein the performing of the sync status update comprises performing no sync status update in case that the domain identifier is different from a domain identifier of a domain in which the UE is included.

4. The method of claim 1, wherein the performing of the sync status update comprises performing no sync status update in case that the domain identifier is identical to a domain identifier of a domain in which the UE is included and the reference identifier is identical to a reference identifier stored by the UE.

5. The method of claim 1, wherein the performing of the sync status update comprises performing the sync status update in case that the domain identifier is identical to a domain identifier of a domain in which the UE is included and the reference identifier is different from a reference identifier stored by the UE.

6. The method of claim 1, wherein the performing of the sync status update comprises:
performing a transition to an RRC_Connected state with the base station; and
receiving, from the base station, a radio resource control (RRC) message including information about a sync status.

7. The method of claim 6, further comprising:
storing the reference identifier and the domain identifier; and
performing a transition to an RRC_Idle state with the base station.

8. A method, performed by a base station, of performing communication in a wireless communication system, the method comprising:
receiving, from a user equipment (UE), a registration message including UE capability information;
transmitting, to the UE, a synchronization information block (SIB) including a reference identifier for performing synchronization and a domain identifier for grouping a plurality of UEs; and
performing a sync status update of the UE based on the reference identifier and the domain identifier.

9. The method of claim 8, wherein the reference identifier includes an event identifier indicating whether an event has occurred in a sync status and a scope identifier indicating units having a same sync status.

10. The method of claim 8, wherein the performing of the sync status update of the UE comprises performing no sync status update in case that the domain identifier is different from a domain identifier of a domain in which the UE is included.

11. The method of claim 8, wherein the performing of the sync status update of the UE comprises performing no sync status update in case that the domain identifier is identical to a domain identifier of a domain in which the UE is included and the reference identifier is identical to a reference identifier stored by the UE.

12. The method of claim 8, wherein the performing of the sync status update of the UE comprises performing the sync status update in case that the domain identifier is identical to a domain identifier of a domain in which the UE is included and the reference identifier is different from a reference identifier stored by the UE.

13. The method of claim 8, wherein the performing of the sync status update of the UE comprises:
performing a transition to an RRC_Connected state with the UE; and
transmitting, to the UE, a radio resource control (RRC) message including information about a sync status.

14. The method of claim 13, further comprising performing a transition to an RRC_Idle state with the UE in case that the sync status update of the UE is completed.

15. A user equipment (UE) for performing communication in a wireless communication system, the UE comprising:
a transceiver; and
at least one processor coupled to the transceiver and configured to:
transmit, to a base station, a registration message including UE capability information;
receive, from the base station, a synchronization information block (SIB) including a reference identifier for performing synchronization and a domain identifier for grouping a plurality of UEs; and
perform a sync status update based on the reference identifier and the domain identifier.
